# EUROPEAN PATENT SPECIFICATION

(11) **EP 3 001 749 B1**
(45) Date of publication and mention of the grant of the patent: **05.07.2017**
(21) Application number: 14306466.5
(22) Date of filing: 24.09.2014
(51) Int. Cl.: H04W 72/08, H04W 16/14

(54) **SELECTION OF AN OPERATION CHANNEL IN A WIRELESS NETWORK ACCORDING TO INTERFERENCE INFORMATION**
AUSWAHL EINES KOMMUNIKATIONSKANALS IN EINEM DRAHTLOSEN NETZWERK BASIERT AUF INTERFERENZ INFORMATION
SÉLECTION D'UN CANAL DE COMMUNICATIONS DANS UN RÉSEAU SANS FIL EN FONCTION DE L'INTERFÉRENCE

(43) Date of publication of application: 30.03.2016
(73) Proprietor: ALCATEL LUCENT, 92100 Boulogne-Billancourt (FR)
(72) Inventor: Gacanin, Haris, 2018 Antwerpen (BE); Elwekeil, Mohamed Elsayed, 2018 Antwerpen (BE)
(74) Representative: ALU Antw Patent Attorneys

(56) References cited:
- GB-A- 2 451 682
- US-A1- 2004 037 247
- US-A1- 2008 069 275
- US-A1- 2010 173 586

## Description

### Field of the Invention

The field of the invention relates to wireless network interference mitigation. Particular embodiments relate to a method for determining a channel in a wireless network, to an access point for determining a channel in a wireless network and to a computer program product for determining a channel in a wireless network.

### Background

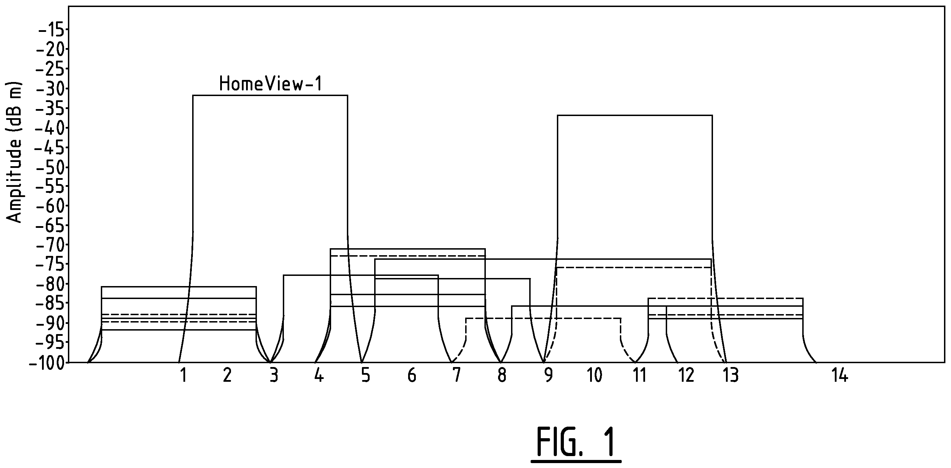

Wireless networks such as WLANs (Wireless Local Area Networks) are widely deployed for internet access due to the ease of installation, the unlicensed operating frequency band, and the inexpensive equipment. Multiple interfering APs (access points) lead to a significant increase in collisions, which reduces throughput and affects media traffic. Interference not only hurts the end-user who may suffer from low speed and limited coverage, but also affects the operators who may not be able to provide the required quality of service (QoS) and thus increases their expenses in dealing with technical and customer support. So, interference mitigation among different APs is a critical issue in WLAN systems from the point of view of both the user and the operator. Interference mitigation requires prior knowledge about existing traffic on the relevant wireless network spectrum, such as the 2.4 GHz ISM (Industrial, Scientific and Medical) band. In order to do that, an AP should properly identify the channels used by neighbouring APs. This is not a trivial task in a network with a large number of connected devices and neighbours. This is a difficult task in an overcrowded spectrum like the one illustrated in figure 1. Moreover, the problem becomes even more severe when the neighbouring APs are under the supervision of different operators (which is a commonly occurring case).

US 2004/037247 A1 discloses a method and system for dynamically selecting a communication channel between an AP and mobile terminals in a WLAN, comprising measuring channel quality for multiple frequency channels, reporting to the AP of candidate channels including RSSI values measured thereof, and selecting one of the channels based on the channel quality report.

US 2010/173586 A1 discloses methods and systems for dynamic spectrum access, sensing spectrum use in some region, and selecting one or more communication channels to use based thereon.

GB2451682 A discloses in the context of interference monitoring updating an element of said stored interference profile information with the passage of time, applying a decay function to the element of the stored interference profile information.

### Summary

It is an object of embodiments of the present invention to reduce the hardware cost of mitigating interference in a wireless network. It is another object of embodiments of the present invention to mitigate interference in a wireless network whilst allowing to take into account user service requirements.

According to a first aspect of the invention, there is provided a method for determining a channel in a wireless network. The wireless network comprises a plurality of access points. The access points are operable on a plurality of channels of said communication network. The method is performed at one access point of said plurality of access points; said one access point has a memory storage with at least one stored interference information.
The method comprises sensing for at least one channel of said plurality of channels a number of operating access points of said plurality of access points operating respectively on said at least one channel.
The method also comprises determining for each operating access point of said number of operating access points interference information pertaining to at least one interference indicator for said operating access point.
The method also comprises determining whether or not to overwrite a stored interference information based on said at least one stored interference information and the determined interference information.
The method also comprises determining a channel of said plurality of channels based on at least a part of the interference information stored in said memory storage.

In this manner, by taking into account the limited available memory storage for storing interference information about a potentially very large number of access points, in order to determine a channel, the method allows to better mitigate interference while respecting user device's service requirements and while keeping hardware cost low. The determined channel may be selected for operational use (*i.e*., channel selection), or may only be taken into consideration without selecting the determined channel for operational use.

Moreover, an embodiment of the method allows to determine a channel in an uncoordinated manner that not necessarily requires a central management system. Furthermore, the method is suitable for dealing with access points that use different algorithms and assumptions, because of different vendors.

In an embodiment, the method comprises detecting whether sufficient available space in said memory storage is available for storing said determined interference information in said memory storage.
When it is detected that sufficient available space in said memory storage is available, the method comprises storing said determined interference information in said available space in said memory storage.
When it is detected that insufficient available space in said memory storage is available, the method comprises performing the following steps: comparing said determined interference information with at least one stored interference information previously stored in said memory storage; and based on the result of said comparing, storing said determined interference information instead of a stored interference information previously stored in said memory storage.

In this manner, by comparing the newly determined interference information with at least one previously stored interference information, it is possible to determine whether or not to overwrite a stored interference information (preferably one with which the comparison was made and which appears least likely to cause interference for the channel at hand). This allows to efficiently use the available memory storage space while still taking into account all sensed neighbouring access points. In this manner, costs can be reduced while still respecting user devices' quality of service experience.

It will be understood that the determined interference information may also be discarded, based on the result of the comparing. In other words, if it is found that the determined interference information apparently will not substantially impact interference (e.g., since it is many times smaller than most or even all other interference information values for the channel at hand), the determined interference information may be discarded rather than stored. In alternative embodiments, such interference information may nevertheless be stored if there is still sufficient available space.

In an embodiment, said at least one interference indicator comprises a received signal strength indicator, RSSI.

In an embodiment, said comparing determines a non-maximal, preferably minimal interference for a given channel.

In an embodiment, the method comprises storing interference information in said memory storage comprises at least one of creating and updating a self-sorting data structure containing at least said interference information.

In this manner, it is possible to efficiently store information in the limited-capacity memory storage of the access point while still allowing quick comparison with a minimum or maximum value.

In an embodiment, the method is performed intermittently, preferably at least daily, more preferably at least hourly, most preferably at least once every fifteen minutes.

In an embodiment, the method comprises receiving at said one access point feedback indications from a respective number of user devices serviced by said one access point over said determined channel. A feedback indication relates to a corresponding user device's experienced quality of service of said one access point.

In a further developed embodiment, said experienced quality of service pertains to a difference between a data rate received by said user device and a pre-determined threshold.

In a further developed embodiment, the method comprises evaluating a satisfaction level of said determined channel based on said received feedback indications.

In a further developed embodiment, the method comprises notifying an operator of said communication network based on said received feedback indications.

In a further developed embodiment, the method comprises determining another channel than said determined channel based on at least a part of the interference information stored in said memory storage and on said received feedback indications.

According to a second aspect of the invention, there is provided an access point for determining a channel in a wireless network. The wireless network comprises a plurality of access points. The access points are operable on a plurality of channels of said communication network. Said access point comprises a memory storage, a channel sensor, an interference processor, a decision processor, and a channel determination module.
The memory storage is configured for storing at least one stored interference information, preferably comprising a received signal strength indicator, RSSI.
The channel sensor is configured for sensing for at least one channel of said plurality of channels a number of operating access points of said plurality of access points operating respectively on said at least one channel.
The interference processor is configured for determining for each operating access point of said number of operating access points interference information pertaining to at least one interference indicator for said operating access point.
The decision processor is configured for determining whether or not to overwrite a stored interference information based on said at least one stored interference information and the determined interference information.
The channel determination module is configured for determining a channel of said plurality of channels based on at least a part of the interference information stored in said memory storage.

In will be understood by the skilled person that the hereinabove described considerations and advantages for the method embodiments also apply for the access point embodiments, *mutatis mutandis.*

In an embodiment, the decision processor is configured for detecting whether sufficient available space in said memory storage is available for storing said determined interference information in said memory storage.
The decision processor is also configured for comparing said determined interference information with at least one stored interference information previously stored in said memory storage; and at least one of the following.
The decision processor is also configured for storing said determined interference information in said available space in said memory storage.
The decision processor is also configured for storing said determined interference information instead of a stored interference information previously stored in said memory storage.

In a further developed embodiment, the decision processor is configured for determining a non-maximal, preferably minimal interference for a given channel.

In an further developed embodiment, the decision processor is configured for creating and updating a self-sorting data structure containing at least said interference information.

It will be understood that the hereinabove described embodiments of access points according to the present invention may be further developed in line with the hereinabove described embodiments of methods according to the present invention. More in particular, the access point may comprise a feedback indication receiver to receive the feedback indications, a feedback evaluator to evaluate the satisfaction level, and/or a notification module to notify the operator.

According to a third aspect of the invention, there is provided a computer program product comprising computer-executable instructions for performing a method when the program is run on a computer, the method comprising the steps of any one of the methods described hereinabove.

### Brief Description of the Figures

The accompanying drawings are used to illustrate presently preferred non-limiting exemplary embodiments according to the present invention. The above and other advantages of the features of embodiments according to the invention and objects of the invention will become more apparent and the invention will be better understood from the following detailed description when read in conjunction with the accompanying drawings, in which:
Figure 1 illustrates an example of a crowded wireless network spectrum;
Figure 2 illustrates an example of a setup comprising multiple interfering wireless network access points;
Figure 3 illustrates an embodiment of a method according to the present invention;
Figure 4A illustrates another embodiment of a method according to the present invention;
Figure 4B illustrates an exemplary detail of another embodiment of a method according to the present invention;
Figure 5 illustrates an exemplary representation of a memory storage of an access point;
Figure 6A illustrates an embodiment of a method according to the present invention;
Figure 6B illustrates an exemplary representation of a number of feedback indications;
Figure 7 illustrates an embodiment of an access point according to the present invention; and
Figure 8 illustrates another embodiment of an access point according to the present invention.

### Description of Embodiments

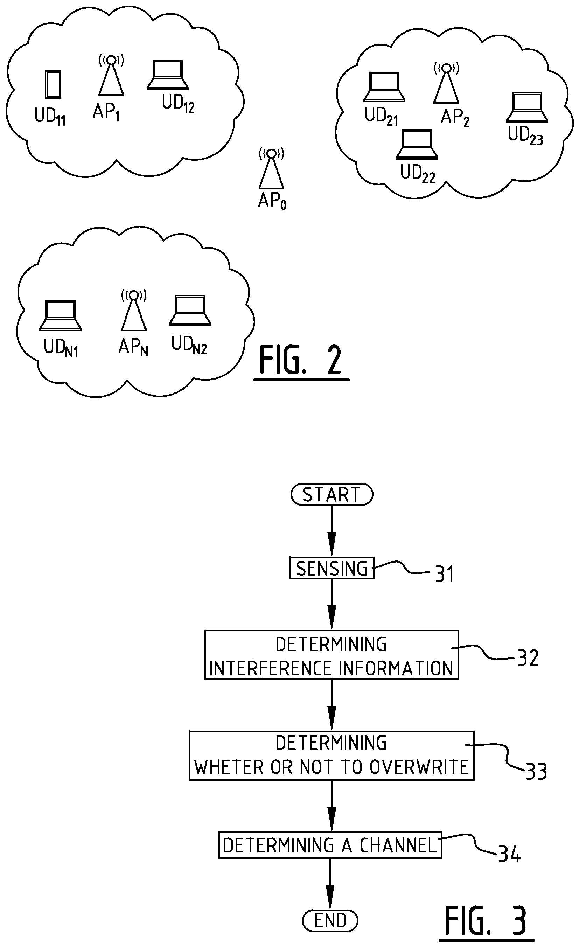

Figure 2 illustrates an example of a setup comprising multiple interfering wireless network access points AP₀ to AP_{N}, wherein a vendor or user wishes to place its AP (AP₀) and there are N neighbouring APs (AP₁ to AP_{N}) in the surroundings, at least some of which are servicing corresponding user devices UD over a number of channels. Moreover, the available memory (not shown) in the vendor's or user's AP₀ is limited to a limited number (M) of memory locations (*e.g*., because of hardware cost considerations) and available channels (C) are limited and overlapping. In many real situations, the values of N, M and C obey the following inequalities: M ≥ C, N >> C and N >> M. It will be understood that in the setup shown it is desirable to mitigate interference for AP₀.

In general, interference mitigation may be coordinated (centrally managed or distributed) or uncoordinated. Centrally managed interference mitigation, where the neighbouring APs can collaborate with each other to reduce the mutual interference, is valid only for APs that work under supervision of the same operator. This includes AP placement, beamforming, channel assignment and power control. In the uncoordinated case, each AP will try to mitigate the interference it experiences from neighbouring APs autonomously without any exchange of information with the neighbouring APs. This is a common scenario when APs belong to different operators. Uncoordinated interference mitigation includes AP placement, channel selection and beamforming. It is typically assumed that there is collaboration among neighbouring APs. However, this collaboration is not guaranteed in many scenarios such as public hotspots, domestic neighbourhoods and contiguous offices.

Generally, in channel selection, an AP should select a frequency channel other than the channels that are used by the neighbouring APs. None of the known channel selection algorithms takes into account the number of neighbouring APs and the memory/processing limitations of a target AP along with the quality of service delivered to the end users. Hence, the channel selected by an AP may not be the best channel to be used. Thus, user devices will suffer from limited data rates and the operator will have to solve this problem in order to deliver the required quality of service.

In a prior art algorithm for determining a channel to operate on from 11 valid channels, an access point (AP) will start its scan from channel 1 up to channel 11 and register some parameters about every detected neighbouring AP in order to be able to take a decision about the best channel to be used. This procedure is valid if the number of neighbouring APs is not very large because of the memory limitations of the scanning AP. In some cases, there may be more than 90 APs in the surroundings. Specifically, an example from real life is shown in figure 1. In this example, the Home view-1 AP attempts to select a channel such that the interference it sees from the neighbouring APs is minimal. So, the Home view-1 AP scans the 2.4 GHz band and stores the information about the neighbouring APs. Because of the large number of neighbouring APs along with the shortage in the available memory that the Homeview-1 AP has, the Homeview-1 AP manages to store information about only 15 APs out of the 93 neighbouring APs. Moreover, because it starts the scan from channel 1, all the APs about which the Homeview-1 AP stored information were operating on channel 1. In this case, the Homeview-1 AP will assume that only channel 1 is occupied and the others are free. Hence, the Homeview-1 AP will select a channel which may not have the minimum interference. This of course will affect the quality of service delivered to the end users.

Figure 3 illustrates an embodiment of a method according to the present invention. The method commences by sensing 31, once, continuously, intermittently or erratically, for one or more channels on which the access point, on which the method is executed, is operable, the operating access points that are operating on the respective one or more channels. In other words, the access point may attempt to detect all potentially interfering access points for each channel.
For each such operating access point that is sensed, the method determines interference information 32 for the operating access point. The interference information pertains to one or more interference indicators (*i.e*., measures or parameters that may impact interference between neighbouring access points). The interference information may comprise a received signal strength indicator (RSSI) for the access point, according to any one of the numerous definitions that exist of RSSIs. The interference information may further comprise the noise strength received from the respective access point.
The method next comprises determining whether or not to overwrite 33 a stored interference indicator, based on at least one previously stored interference information and the determined interference information.
The method also comprises determining a channel 34 of the one or more channels on which the access point is operable. The channel is determined based on at least a part of the interference information stored in the memory storage of the access point. In other words, the method may consider all or some of the values representing the stored interference information in order to determine a channel for the access point to operate on, taking into account potential interference from the respective corresponding neighbouring access points.

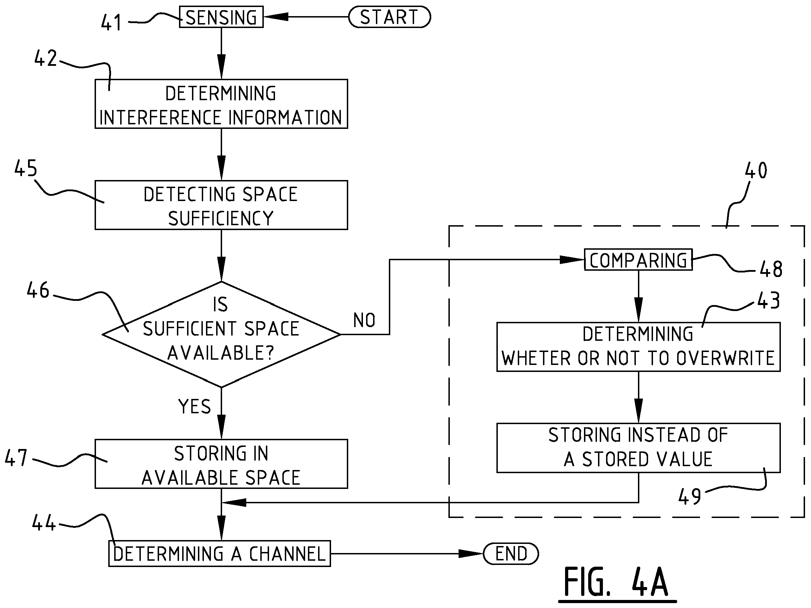

Figure 4A illustrates another embodiment of a method according to the present invention. The method embodiment comprises analogous steps 41, 42, 43 and 44 to the respective steps 31, 32, 33 and 34 of the embodiment shown in figure 3.
The method further comprises detecting 45 whether sufficient available space in the memory storage is available for storing the determined interference information therein. When it is subsequently detecting that there is indeed sufficient space, the method may store in the available space 47 the determined interference information. When it is detected that there is however not sufficient space, the method may compare 48 the determined interference information with one or more previously stored interference information values stored in the memory storage, and, analogously to the determining whether or not to overwrite 43 of figure 3, based on the result of that comparison, store 49 the determined interference information instead of (*i.e*., overwriting) a previously stored interference information value stored in the memory storage. In other words, only the neighbouring APs with high interference information values will be retained, since only those APs are substantially relevant to interference experienced at the access point.
The method further determines a channel 44 for the AP to operate on.

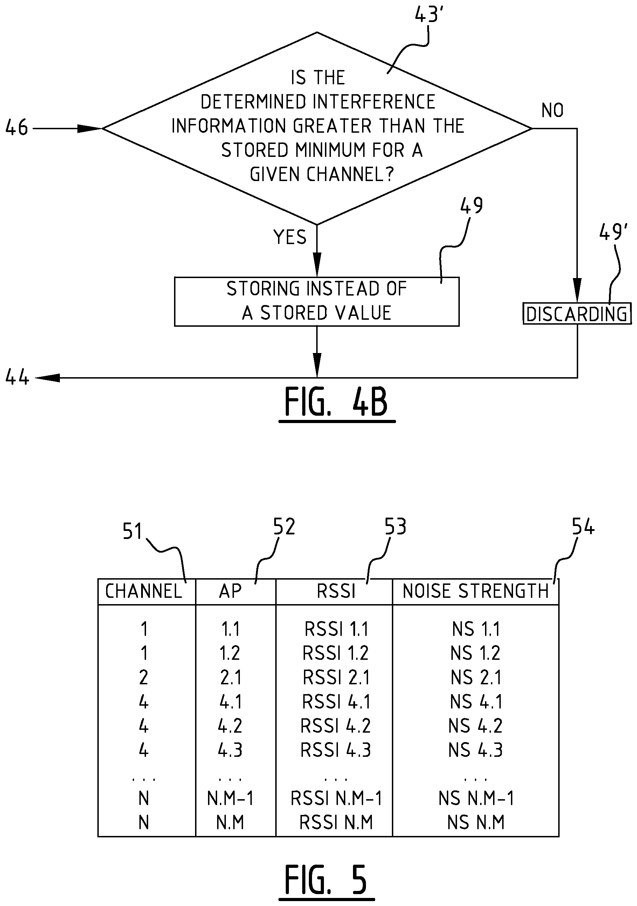

Figure 4B illustrates an exemplary detail of another embodiment of a method according to the present invention. The detail corresponds to reference 40 of figure 4A, but in the embodiment shown in figure 4B, the steps of comparing 48 and determining 43 are represented by the step 43', wherein it is determined whether the determined interference information is greater than the stored minimum for a given channel. In other words, the minimum interference value for the channel corresponding to the determined interference information is selected, and based on a comparison with that minimum interference value, it is determined whether 49 or not 49' to store (respectively discard) the determined interference information. If a self-sorting data structure is used for storing interference information in the memory storage, a minimum value for the interference information for a given channel can be retrieved for comparison very efficiently, since storing new interference information in the self-sorting data structure will respect the ordering. Nevertheless, the skilled person will understand that other manners for retrieving a previously stored interference information value (preferably a non-maximal, preferably the minimal) can be used.

Figures 5 illustrates an exemplary representation of a memory storage of an access point wherein has been stored interference information by an embodiment of a method according to the present invention. The memory storage has limited capacity (*e.g*., because of hardware cost considerations). For each channel of the wireless network, an indication is stored in column 51. For each access point operating on each channel, an indication is stored in column 52. It is noted that the list of access points stored in the exemplary representation of the memory storage shown in this figure may not comprise all neighbouring access point, since the embodiment of the method may have determined not to store some of the determined interference information for certain access points, for example when the interference information appeared unlikely to cause much interference for a given channel in comparison to previously determined and stored interference information for access points of the given channel. The skilled person will understand that the indications used here are merely exemplary, and are in no way meant to be limiting. An example variant representation may for instance combine both the channel and the access point indication as a single indication, or may use the access point's SSID (Service Set Identification). Further, for each access point, an RSSI (received signal strength indicator) is stored in column 53, that represents the signal strength of the corresponding access point as received at the access point on which the method has been executed. The exemplary representation shown here also illustrates that a noise strength has been stored in column 54 for each access point. The skilled person will understand that interference information may be represented in any of a number of ways, and that using only the RSSI column 53 without the noise strength column 54, or other configurations, may suffice.

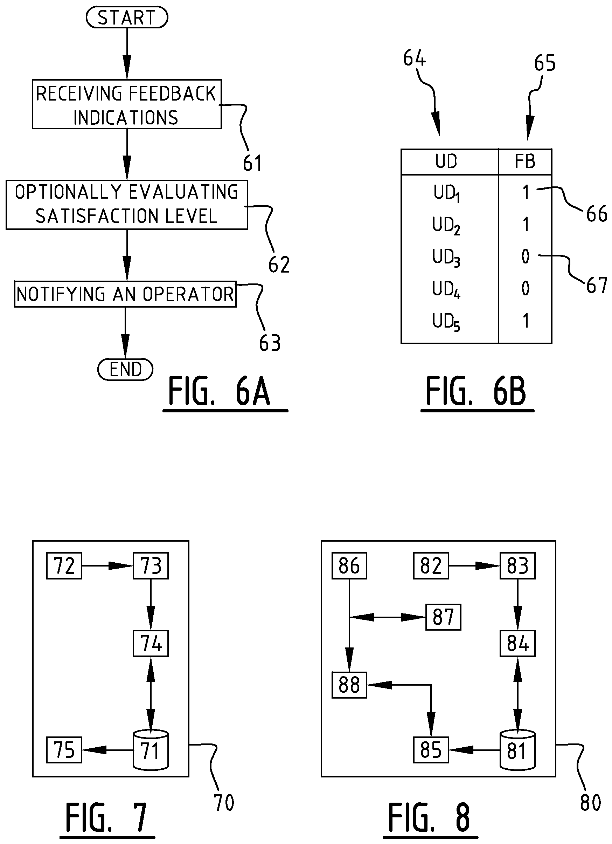

Figure 6A illustrates an embodiment of a method according to the present invention.
The method comprises receiving at an access point feedback notifications 61 from a number of user devices being serviced by the access point over a certain channel. The feedback indications relate to quality of service as experienced by the corresponding user device. An example quality of service may pertain to a difference between a data rate as received or transmitted by the user device and a pre-determined threshold. The quality of service may additionally or alternatively pertain to a continuity of service or to another measure that impact the experience the user device has of the service delivered by the access point.
The method optionally also comprises evaluating a satisfaction level 62 of the user devices' experienced quality of service based on the feedback indications. The evaluation may take the form of scoring the level of satisfaction amongst the user devices serviced by the access point, and deciding whether or not the channel on which the access point is operating is deemed satisfactory to the user devices.
The method also may comprise notifying an operator 63 of the communication network based on the received feedback notifications and/or based on the evaluated satisfaction level. By notifying the operator, the method may allow improved analysis of the access point's operating setup, and, by consequence, may allow the operator to pro-actively intervene if necessary.

Figure 6B illustrates an exemplary representation of a number of feedback indications. The feedback indications shown in this figure comprise a table 60 mapping a user device from column 64 to a feedback indication in column 65. The user devices may be denoted using any valid indication, such as their respective MAC-addresses, etc. The feedback indications shown in column 65 are, in this exemplary representation, either 0 or 1, to indicate that the user device is satisfied or not satisfied respectively. The skilled person will understand that other feedback indications may be conceived that relate to user devices' experienced quality of service of the access point, and that the feedback indications may comprise a distinction between more than the two satisfaction values 0 and 1, or may comprise a complex feedback indication that contains more information about the user device and its conditions.

In some embodiments, the AP will make a majority voting of the feedback indications. If most of the user devices are satisfied with the determined channel that has been selected for operation, the AP will continue to use that. On the other hand, if the majority of the users are not satisfied with the current channel, the AP may choose to select another channel. However, given that the AP has previously already determined a channel taking into account interference from neighbouring access points and given that interference from neighbouring APs may not change very quickly, it may not be advantageous to select a new channel, even when a significant number of the user devices are not satisfied with the currently selected channel.

Figure 7 illustrates an embodiment of an access point according to the present invention. The access point 70 comprises a memory storage 71, a channel sensor 72, an interference processor 73, a decision processor 74 and a channel determination module 75. The components shown in figure 7 provide a schematic exemplary representation of components for performing the above described method embodiment of figure 3.

Figure 8 illustrates another embodiment of an access point according to the present invention. The access point 80 comprises a memory storage 81, a channel sensor 82, an interference processor 83, a decision processor 84 and a channel determination module 85. The access point 80 also comprises a feedback indication receiver 86 configured for receiving feedback indications from user devices as explained in relation to figure 6A. The access point optionally also may comprise a feedback evaluator 87 configured for evaluating a satisfaction level of the user devices based on feedback received by the feedback indication receiver 86 as explained in relation to figure 6A. The access point 80 may further also comprise a notification module 88 configured for notifying an operator of the communication network as explained in relation to figure 6A. The other components shown in figure 7 provide a schematic exemplary representation of components for performing the above described method embodiment of figure 3.

A person of skill in the art would readily recognize that steps of various above-described methods can be performed by programmed computers. Herein, some embodiments are also intended to cover program storage devices, *e.g*., digital data storage media, which are machine or computer readable and encode machine-executable or computer-executable programs of instructions, wherein said instructions perform some or all of the steps of said above-described methods. The program storage devices may be, *e.g.,* digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

## Claims

1. A method for determining a channel in a wireless network comprising a plurality of access points operable on a plurality of channels of said communication network, comprising the following steps performed at one access point of said plurality of access points, said one access point having a memory storage with at least one stored interference information:
- sensing (31; 41) for at least one channel of said plurality of channels a number of operating access points of said plurality of access points operating respectively on said at least one channel;
- determining (32; 42) for each operating access point of said number of operating access points interference information pertaining to at least one interference indicator for said operating access point; and
- determining (34; 44) a channel of said plurality of channels based on at least a part of the interference information stored in said memory storage; and **characterized by**
- determining (33; 43) whether or not to overwrite a stored interference information based on said at least one stored interference information and the determined interference information.

2. The method of claim 1, comprising:
- detecting (45, 46) whether sufficient available space in said memory storage is available for storing said determined interference information in said memory storage;
- when it is detected that sufficient available space in said memory storage is available, storing (47) said determined interference information in said available space in said memory storage; and
- when it is detected that insufficient available space in said memory storage is available, performing the following steps (40):
- comparing (48) said determined interference information with at least one stored interference information previously stored in said memory storage; and
- based on the result of said comparing, storing (49) said determined interference information instead of a stored interference information previously stored in said memory storage.

3. The method of claim 1 or 2, wherein said at least one interference indicator comprises a received signal strength indicator, RSSI.

4. The method of any one of the previous claims, wherein said comparing determines a non-maximal, preferably minimal interference for a given channel.

5. The method of any one of the previous claims, wherein storing interference information in said memory storage comprises at least one of creating and updating a self-sorting data structure containing at least said interference information.

6. The method of any one of the previous claims, performed intermittently, preferably at least daily, more preferably at least hourly, most preferably at least once every fifteen minutes.

7. The method of any one of the previous claims, comprising the following step performed at said one access point:
- receiving (61) feedback indications from a respective number of user devices serviced by said one access point over said determined channel;
wherein a feedback indication relates to a corresponding user device's experienced quality of service of said one access point.

8. The method of claim 7, wherein said experienced quality of service pertains to a difference between a data rate received by said user device and a pre-determined threshold.

9. The method of any one of the claims 7-8, comprising:
- notifying (63) an operator of said communication network based on said received feedback indications.

10. The method of any one of the claims 7-9, comprising:
- determining another channel than said determined channel based on at least a part of the interference information stored in said memory storage and on said received feedback indications.

11. An access point for determining a channel in a wireless network comprising a plurality of access points operable on a plurality of channels of said communication network, said access point comprising:
- a memory storage (71; 81) configured for storing at least one stored interference information, preferably comprising a received signal strength indicator, RSSI;
- a channel sensor (72; 82) configured for sensing for at least one channel of said plurality of channels a number of operating access points of said plurality of access points operating respectively on said at least one channel;
- an interference processor (73; 83) configured for determining for each operating access point of said number of operating access points interference information pertaining to at least one interference indicator for said operating access point; and
- a channel determination module (75; 85) configured for determining a channel of said plurality of channels based on at least a part of the interference information stored in said memory storage; and **characterized by**
- a decision processor (74; 84) configured for determining whether or not to overwrite a stored interference information based on said at least one stored interference information and the determined interference information.

12. The access point of claim 11, wherein said decision processor is configured for:
- detecting whether sufficient available space in said memory storage is available for storing said determined interference information in said memory storage;
- comparing said determined interference information with at least one stored interference information previously stored in said memory storage; and at least one of the following:
- storing said determined interference information in said available space in said memory storage; and
- storing said determined interference information instead of a stored interference information previously stored in said memory storage.

13. The access point of any one of the claims 11-12, wherein said decision processor is configured for determining a non-maximal, preferably minimal interference for a given channel.

14. The access point of any one of the claims 11-13, wherein said decision processor is configured for creating and updating a self-sorting data structure containing at least said interference information.

15. A computer program product comprising computer-executable instructions for performing a method when the program is run on a computer, the method comprising the steps of any one of the methods of any one of the claims 1-10.

## Patentansprüche

1. Verfahren zur Auswahl eines Kanals in einem drahtlosen Netz, welches eine Vielzahl von Zugangspunkten umfasst, die für den Zugang zu einer Vielzahl von Kanälen besagten Kommunikationsnetzes ausgelegt sind, die folgenden, an einem Zugangspunkt aus der besagten Vielzahl von Zugangspunkten ausgeführten Schritte umfassend, wobei der besagte eine Zugangspunkt einen Speicher mit mindestens einer gespeicherten Interferenzinformation umfasst:
- für mindestens einen Kanal aus besagter Vielzahl von Kanälen das Erfassen (31; 41) einer Anzahl aktiver Zugangspunkte aus besagter Vielzahl von Zugangspunkten, die jeweils auf den besagten, mindestens einen Kanal einwirken;
- für jeden aktiven Zugangspunkt aus besagter Vielzahl aktiver Zugangspunkte das Bestimmen (32; 42) von Interferenzinformationen, die mindestens einen Interferenzindikator für besagten aktiven Zugangspunkt betreffen; und
- das Bestimmen (34; 44) eines Kanals aus besagter Vielzahl von Kanälen auf der Grundlage mindestens eines Teils der in besagtem Speicher gespeicherten Interferenzinformationen; sowie **gekennzeichnet durch**
- das Bestimmen (33; 43) auf der Grundlage der besagten, mindestens einen gespeicherten Interferenzinformation und der bestimmten Interferenzinformation, ob eine gespeicherte Interferenzinformation zu überschreiben ist oder nicht.

2. Das Verfahren nach Anspruch 1, umfassend:
- das Feststellen (45; 46), ob in besagtem Speicher ausreichend Speicherplatz verfügbar ist, um die besagte, bestimmte Interferenzinformation in besagtem Speicher zu speichern;
- wenn festgestellt wird, dass in besagtem Speicher ausreichend Speicherplatz verfügbar ist, das Speichern (47) der besagten, bestimmten Interferenzinformation in besagtem, verfügbarem Speicherplatz besagten Speichers; und
- wenn festgestellt wird, dass in besagtem Speicher nicht ausreichend Speicherplatz verfügbar ist, das Ausführen der folgenden Schritte (40):
- das Vergleichen (48) der besagten, bestimmten Interferenzinformation mit mindestens einer gespeicherten Interferenzinformation, die zuvor in besagtem Speicher gespeichert wurde; und
- auf der Grundlage des Ergebnisses des besagten Vergleichs das Speichern (49) der besagten Interferenzinformation anstelle einer gespeicherten Interferenzinformation, die zuvor in besagtem Speicher gespeichert wurde.

3. Das Verfahren nach Anspruch 1 oder 2, wobei der besagte, mindestens eine Interferenzindikator einen Indikator für die Stärke des empfangenen Signals (Received Signal Strength Indicator, RSSI) umfasst.

4. Das Verfahren nach einem jeglichen der vorgenannten Ansprüche, wobei besagtes Vergleichen eine nichtmaximale, vorzugsweise minimale Interferenz für einen gegebenen Kanal bestimmt.

5. Das Verfahren nach einem jeglichen der vorgenannten Ansprüche, wobei das Speichern der Interferenzinformation in besagtem Speicher mindestens entweder das Erstellen und oder das Aktualisieren einer selbstsortierenden Datenstruktur umfasst, welche mindestens die besagte Interferenzinformation umfasst.

6. Das Verfahren nach einem jeglichen der vorgenannten Ansprüche, periodisch ausgeführt, vorzugsweise mindestens täglich, noch lieber mindestens stündlich, am liebsten mindestens alle fünfzehn Minuten.

7. Das Verfahren nach einem jeglichen der vorgenannten Ansprüche, den folgenden, an besagtem einem Zugangspunkt ausgeführten Schritt umfassend:
- den Empfang (61) von Feedback-Indikationen von einer entsprechenden Anzahl von Benutzergeräten, die von besagtem einem Zugangspunkt über besagten bestimmten Kanal bedient werden;
wobei eine Feedback-Indikation sich auf die entsprechende, von einem Benutzergerät erfahrene Dienstgüte besagten einen Zugangspunkts bezieht.

8. Das Verfahren nach Anspruch 7, wobei sich besagte erfahrene Dienstgüte auf einen Unterschied zwischen einer von besagtem Benutzergerät empfangenen Datenrate und einem vorbestimmten Grenzwert bezieht.

9. Das Verfahren nach einem beliebigen der Ansprüche 7 bis 8, umfassend:
- das Benachrichtigen (63) eines Betreibers besagten Kommunikationsnetzes auf der Grundlage besagter empfangener Feedback-Indikationen.

10. Das Verfahren nach einem beliebigen der Ansprüche 7 bis 9, umfassend:
- das Bestimmen eines anderen als des besagten, bestimmten Kanals auf der Grundlage mindestens eines Teils der Interferenzinformation, die in besagtem Speicher gespeichert ist, und auf der Grundlage der besagten, empfangenen Feedback-Indikationen.

11. Zugangspunkt für das Bestimmen eines Kanals in einem drahtlosen Netz, eine Vielzahl von Zugangspunkten umfassend, die für den Zugang zu einer Vielzahl von Kanälen besagten Kommunikationsnetzes ausgelegt sind, wobei besagter Zugangspunkt umfasst:
- einen Speicher (71; 81), der konfiguriert ist für das Speichern mindestens einer gespeicherten Interferenzinformation, welche vorzugsweise einen Indikator für die Stärke des empfangenen Signals (RSSI);
- Einen Kanalsensor (72; 82), der dafür konfiguriert ist, um für mindestens einen Kanal aus besagter Vielzahl von Kanälen eine Anzahl aktiver Zugangspunkte aus besagter Vielzahl von Zugangspunkten zu erfassen, die jeweils auf den besagten, mindestens einen Kanal einwirken;
- einen Interferenzprozessor (73; 83), der dafür konfiguriert ist, um für jeden aktiven Zugangspunkt aus besagter Vielzahl aktiver Zugangspunkte Interferenzinformationen zu bestimmen, die mindestens einen Interferenzindikator für besagten aktiven Zugangspunkt betreffen; und
- ein Kanalbestimmungsmodul (75; 85), das konfiguriert ist für das Bestimmen eines Kanals aus besagter Vielzahl von Kanälen auf der Grundlage mindestens eines Teils der in besagtem Speicher gespeicherten Interferenzinformationen; sowie **gekennzeichnet durch**
- einen Entscheidungsprozessor (74; 84), der dafür konfiguriert ist, um auf der Grundlage der besagten, mindestens einen gespeicherten Interferenzinformation und der bestimmten Interferenzinformation zu bestimmen, ob eine gespeicherte Interferenzinformation zu überschreiben ist oder nicht.

12. Der Zugangspunkt nach Anspruch 11, wobei besagter Entscheidungsprozessor konfiguriert ist für:
- das Feststellen, ob in besagtem Speicher ausreichend Speicherplatz verfügbar ist, um die besagte, bestimmte Interferenzinformation in besagtem Speicher zu speichern;
- das Vergleichen der besagten, bestimmten Interferenzinformation mit mindestens einer gespeicherten Interferenzinformation, die zuvor in besagtem Speicher gespeichert wurde; und für mindestens einen der folgenden Schritte:
- das Speichern besagter bestimmter Interferenzinformation in besagtem, verfügbarem Speicherplatz besagten Speichers; oder
- das Speichern der besagten, bestimmten Interferenzinformation anstelle mindestens einer gespeicherten Interferenzinformation, die zuvor in besagtem Speicher gespeichert wurde.

13. Der Zugangspunkt nach jeglichem der Ansprüche 11 bis 12, wobei besagter Entscheidungsprozessor konfiguriert ist für das Bestimmen einer nichtmaximalen, vorzugsweise minimalen Interferenz für einen gegebenen Kanal.

14. Der Zugangspunkt nach einem der Ansprüche 11 bis 13, wobei besagter Entscheidungsprozessor konfiguriert ist für das Erstellen und Aktualisieren einer selbstsortierenden Datenstruktur, welche mindestens die besagte Interferenzinformation umfasst.

15. Computerprogramm-Produkt, das von einem Computer ausführbare Befehle zur Durchführung eines Verfahrens umfasst, wenn das Programm auf einem Computer ausgeführt wird, wobei das Verfahren die Schritte nach einem jeglichen der Verfahren aus einem jeglichen der Ansprüche 1 bis 10 umfasst.

## Revendications

1. Procédé pour déterminer un canal dans un réseau sans fil comprenant une pluralité de points d'accès pouvant fonctionner sur une pluralité de canaux dudit réseau de communication, comprenant les étapes suivantes effectuées au niveau d'un point d'accès de ladite pluralité de points d'accès, ledit point d'accès ayant un stockage de mémoire avec au moins une information d'interférence stockée :
- capter (31 ; 41) pour au moins un canal de ladite pluralité de canaux un nombre de points d'accès fonctionnant de ladite pluralité de points d'accès fonctionnant respectivement sur ledit au moins un canal ;
- déterminer (32 ; 42) pour chaque point d'accès fonctionnant dudit nombre de points d'accès fonctionnant des informations d'interférence se rapportant à au moins un indicateur d'interférence pour ledit point d'accès fonctionnant ; et
- déterminer (34 ; 44) un canal de ladite pluralité de canaux sur la base d'au moins une partie des informations d'interférence stockées dans ledit stockage de mémoire ; et **caractérisé par**
- déterminer (33 ; 43) si écraser ou non une information d'interférence stockée sur la base de ladite au moins une information d'interférence stockée et des informations d'interférence déterminées.

2. Procédé selon la revendication 1, comprenant les étapes suivantes :
- détecter (45, 46) si un espace disponible suffisant dans ledit stockage de mémoire est disponible pour stocker lesdites informations d'interférence déterminées dans ledit stockage de mémoire ;
- lorsqu'il est détecté qu'un espace disponible suffisant dans ledit stockage de mémoire est disponible, stocker (47) lesdites informations d'interférence déterminées dans ledit espace disponible dans ledit stockage de mémoire ; et
- lorsqu'il est détecté qu'un espace disponible insuffisant dans ledit stockage de mémoire est disponible, effectuer les étapes suivantes (40) :
- comparer (48) lesdites informations d'interférence déterminées avec au moins une information d'interférence stockée précédemment stockée dans ledit stockage de mémoire ; et
- sur la base du résultat de ladite comparaison, stocker (49) lesdites informations d'interférence déterminées à la place d'une information d'interférence stockée précédemment stockée dans ledit stockage de mémoire.

3. Procédé selon la revendication 1 ou 2, dans lequel ledit au moins un indicateur d'interférence comprend un indicateur d'intensité de signal reçu, RSSI.

4. Procédé selon l'une quelconque des revendications précédentes, dans lequel ladite comparaison détermine une interférence non maximale, de préférence minimale pour un canal donné.

5. Procédé selon l'une quelconque des revendications précédentes, dans lequel le stockage d'informations d'interférence dans ledit stockage de mémoire comprend au moins une de la création et de la mise à jour d'une structure de données à tri automatique contenant au moins lesdites informations d'interférence.

6. Procédé selon l'une quelconque des revendications précédentes, effectué par intermittence, de préférence au moins tous les jours, de manière davantage préférée au moins toutes les heures, de manière préférée entre toutes au moins une fois toutes les quinze minutes.

7. Procédé selon l'une quelconque des revendications précédentes, comprenant l'étape suivante effectuée au niveau dudit un point d'accès :
- recevoir (61) des indications de rétroaction en provenance d'un nombre respectif de dispositifs d'utilisateur desservis par ledit point d'accès sur ledit canal déterminé ;
dans lequel une indication de rétroaction concerne une qualité de service éprouvée du dispositif d'utilisateur correspondant dudit point d'accès.

8. Procédé selon la revendication 7, dans lequel ladite qualité de service éprouvée se rapporte à une différence entre un débit de données reçu par ledit dispositif d'utilisateur et un seuil prédéterminé.

9. Procédé selon l'une quelconque des revendications 7 à 8, comprenant l'étape suivante :
- notifier (63) un opérateur dudit réseau de communication sur la base desdites indications de rétroaction reçues.

10. Procédé selon l'une quelconque des revendications 7 à 9, comprenant l'étape suivante :
- déterminer un autre canal que ledit canal déterminé sur la base d'au moins une partie des informations d'interférence stockées dans ledit stockage de mémoire et desdites indications de rétroaction reçues.

11. Point d'accès pour déterminer un canal dans un réseau sans fil comprenant une pluralité de points d'accès pouvant fonctionner sur une pluralité de canaux dudit réseau de communication, ledit point d'accès comprenant :
- un stockage de mémoire (71 ; 81) configuré pour stocker au moins une information d'interférence stockée, comprenant de préférence un indicateur d'intensité de signal reçu, RSSI ;
- un capteur de canal (72 ; 82) configuré pour capter pour au moins un canal de ladite pluralité de canaux un nombre de points d'accès fonctionnant de ladite pluralité de points d'accès fonctionnant respectivement sur ledit au moins un canal ;
- un processeur d'interférence (73 ; 83) configuré pour déterminer pour chaque point d'accès fonctionnant dudit nombre de points d'accès fonctionnant des informations d'interférence se rapportant à au moins un indicateur d'interférence pour ledit point d'accès fonctionnant ; et
- un module de détermination de canal (75 ; 85) configuré pour déterminer un canal de ladite pluralité de canaux sur la base d'au moins une partie des informations d'interférence stockées dans ledit stockage de mémoire ; et
**caractérisé par**
- un processeur de décision (74 ; 84) configuré pour déterminer si écraser ou non une information d'interférence stockée sur la base de ladite au moins une information d'interférence stockée et des informations d'interférence déterminées.

12. Point d'accès selon la revendication 11, dans lequel ledit processeur de décision est configuré pour :
- détecter si un espace disponible suffisant dans ledit stockage de mémoire est disponible pour stocker lesdites informations d'interférence déterminées dans ledit stockage de mémoire ;
- comparer lesdites informations d'interférence déterminées avec au moins une information d'interférence stockée précédemment stockée dans ledit stockage de mémoire ; et au moins une des étapes suivantes :
- stocker lesdites informations d'interférence déterminées dans ledit espace disponible dans ledit stockage de mémoire ; et
- stocker lesdites informations d'interférence déterminées à la place d'une information d'interférence stockée précédemment stockée dans ledit stockage de mémoire.

13. Point d'accès selon l'une quelconque des revendications 11 à 12, dans lequel ledit processeur de décision est configuré pour déterminer une interférence non maximale, de préférence minimale pour un canal donné.

14. Point d'accès selon l'une quelconque des revendications 11 à 13, dans lequel ledit processeur de décision est configuré pour créer et mettre à jour une structure de données à tri automatique contenant au moins lesdites informations d'interférence.

15. Produit de programme informatique comprenant des instructions exécutables par ordinateur pour effectuer un procédé lorsque le programme est exécuté sur un ordinateur, le procédé comprenant les étapes de l'un quelconque des procédés selon l'une quelconque des revendications 1 à 10.
